# EUROPÄISCHE PATENTSCHRIFT

(11) **EP 1 693 916 B1**
(45) Veröffentlichungstag und Bekanntmachung des Hinweises auf die Patenterteilung: **09.09.2009**
(21) Anmeldenummer: 06002563.2
(22) Anmeldetag: 08.02.2006
(51) Int. Cl.: H01M 8/04, H01M 8/06

(54) **Vorwärmer für eine Brennstoffzelle**
Fuel cell preheater
Préchauffeur pour pile à combustible

(30) Priorität: 15.02.2005 DE 102005006868
(43) Veröffentlichungstag der Anmeldung: 23.08.2006
(73) Patentinhaber: P 21-Power for the 21st Century GmbH, 85649 Brunnthal (DE)
(72) Erfinder: Zartenar, Nicolas, 83607 Holzkirchen (DE); Martin, Udo, 85635 Höhenkirchen (DE)
(74) Vertreter: Müller, Thomas

(56) Entgegenhaltungen:
- US-A- 4 041 210
- US-A1- 2002 142 208

## Beschreibung

Die vorliegende Erfindung ist auf einen Vorwärmer, insbesondere für Brennstoffzellen, gerichtet. Des Weiteren ist die Erfindung auch auf ein Verfahren zum Vorwärmen von Brennstoffzellen gerichtet.

Brennstoffzellensysteme sind bereits seit langem bekannt und haben in den letzten Jahren erheblich an Bedeutung gewonnen. Ähnlich wie Batteriesysteme erzeugen Brennstoffzellen elektrische Energie auf chemischem Weg durch eine Redoxreaktion von einem Kraftstoff, insbesondere Wasserstoff und Sauerstoff, wobei die einzelnen Reaktanten kontinuierlich zugeführt und die Reaktionsprodukte kontinuierlich abgeführt werden.

Bei einer Brennstoffzelle werden die zwischen elektrisch neutralen Molekülen oder Atomen ablaufenden Oxidations- und Reduktionsprozesse in der Regel über einen Elektrolyten räumlich getrennt. Eine Brennstoffzelle besteht grundsätzlich aus einem Anodenteil, an den ein Kraftstoff zugeführt wird. Weiterhin weist die Brennstoffzelle einen Kathodenteil auf, an dem ein Oxidationsmittel zugeführt wird. Räumlich getrennt sind der Anoden- und Kathodenteil durch den Elektrolyten. Bei einem derartigen Elektrolyten kann es sich beispielsweise um eine Membran handeln. Solche Membranen haben die Fähigkeit, Ionen durchzuleiten, Gase jedoch zurückzuhalten. Die bei der Oxidation abgegebenen Elektronen werden nicht lokal von Atom zu Atom übertragen, sondern als elektrischer Strom durch einen Verbraucher geleitet.

Als gasförmiger Reaktionspartner für die Brennstoffzelle können beispielsweise Wasserstoff als Kraftstoff und Sauerstoff als Oxidationsmittel im Kathodenteil verwendet werden.

Will man die Brennstoffzelle mit einem leicht verfügbaren oder leichter zu speichernden Brennstoff, wie etwa Erdgas, Methanol, Propan, Benzin, Diesel oder anderen Kohlenwasserstoffen, anstelle von Wasserstoff betreiben, muss man den Kohlenwasserstoff in einer Vorrichtung zum Erzeugen/Aufbereiten eines Kraftstoffs in einem so genannten Reformierungsprozess zunächst in ein wasserstoffreiches Gas umwandeln. Diese Vorrichtung zum Erzeugen/Aufbereiten eines Brennstoffs besteht beispielsweise aus einer Dosiereinheit mit Verdampfer, einem Reaktor für die Reformierung, beispielsweise für die Wasserdampfreformierung, einer Gasreinigung sowie häufig auch wenigstens einem katalytischen Brenner zur Bereitstellung der Prozesswärme für die endothermen Prozesse, beispielsweise den Reformierungsprozess.

Ein Brennstoffzellensystem besteht in der Regel aus mehreren Brennstoffzellen, die beispielsweise wiederum aus einzelnen Schichten gebildet sein können. Die Brennstoffzellen sind vorzugsweise hintereinander angeordnet, beispielsweise sandwichartig übereinander gestapelt. Ein derart ausgebildetes Brennstoffzellensystem wird dann als Brennstoffzellenstapel beziehungsweise Brennstoffzellenstack bezeichnet.

Für einen optimalen Betriebszustand eines Brennstoffzellen-Systems sind thermische Randbedingungen einzuhalten. Im Wesentlichen sind dies keine zu niedrige Kathodenlufteintrittstemperatur und eine Kathodenluftfeuchte, die geeignet ist, einer möglichen Austrocknung der Membranen entgegenzuwirken. Beide Voraussetzungen erfüllen die natürlichen Umgebungsbedingungen, das heißt Umgebungslufttemperatur und Luftfeuchte, in der Regel nicht. Weiterhin muss der Stack eines PEMFC (proton exchange membrane fuel cell)-Systems im sogenannten Deadend-Betrieb mit Kraftstoff, beispielsweise Wasserstoff an der Anode in regelmäßigen Abständen mit Kraftstoff (Wasserstoff) durchgespült werden, also ein so genannter Kraftstoff(Wasserstoff)-Purge durchgeführt werden, um von der Kathode zur Anode diffundiertes Produkt-Wasser und Verunreinigungen im Wasserstoff aus dem Flussbereich (flowfield) des Kraftstoffs (Wasserstoffs) zu entfernen. Das Kraftstoff(Wasserstoff)-Spülgas wird im Allgemeinen an die Umgebung abgegeben, was durch den dadurch verursachten Kraftstoff(Wasserstoff)-Verlust aus dem Kraftstofftank einen Wirkungsgradverlust zur Folge hat. Auch aus sicherheitstechnischer Sicht ist dieses Vorgehen problematisch, das sich in der Nähe des Ausgangs des Kraftstoff(Wasserstoff)-Spülgangs lokal zündfähige Gemische aus Luft und Kraftstoff (Wasserstoff) bilden können.

Eine interne Wärmeauskopplung, um die angesaugte, zur Kathode zu führende Luft auf die geeignete Betriebstemperatur zu bringen und damit die Betriebstemperatur der Brennstoffzelle sicherzustellen, setzt einen stabilen und sich bereits auf Betriebstemperatur befindlichen Betriebspunkt voraus, mit dem eine nicht extern betriebene Wärmetauschung der Vorwärmung der Umgebungsluft stattfinden kann. Im Falle eines Kaltstarts ist dies aber nicht möglich. Ist der Einsatzzweck eines Brennstoffzellensystems eine unterbrechungsfreie Stromversorgung (USV), die nur kurzzeitig Stromausfälle überbrücken soll, wird darüber hinaus der optimale und damit warme Betrieb der Brennstoffzellen in der Regel nicht erreicht.

Daher wird für eine Luftvorwärmung in der Regel ein Heizelement eingesetzt. Dieses Heizelement kann beispielsweise in Form einer elektrischen Widerstandsheizung ausgeführt sein, zum anderen werden separate Brenner eingesetzt, die ein brennbares Gas verbrennen und die thermische Energie mittels eines Wärmetauschers auf die vorzuwärmende Luft übertragen. Weiterhin wird ebenfalls eine interne Wärmeauskopplung, zum Beispiel aus dem Kühlkreislauf vorgenommen.

Gegen einen separaten Brenner spricht der große gerätetechnische Aufwand. Neben dem Brenner und einem geeigneten Brenngas ist zusätzlich ein Wärmeaustauscher notwendig. Die gesamte Baugruppe muss zudem mit einer kompletten Steuerung und Regelung ausgestattet werden, um die geforderten sicherheitstechnischen Aspekte und die Verbrennungshygiene zu gewährleisten.

Der Einsatz eines elektrischen Heizelements führt zu einer deutlichen Wirkungsgradverschlechterung, da für den Betrieb Strom entnommen werden muss, der zuvor erzeugt werden muss. Für den Brennstoffzellenbetrieb als unterbrechungsfreie Stromversorgung ist dieses Konzept prinzipbedingt nicht umzusetzen, da die vom System produzierte elektrische Energie zur Aufrechterhaltung der zu versorgenden Anlage verwendet werden soll und aufgrund des Stromausfalls eine andere Stromquelle zum Anfahren des Systems nicht zur Verfügung steht.

Die US 4,041,210A offenbart einen Brennstoffzellenantrieb, wobei ein Teil des Oxidationsmittelabflusses rezykliert und ein weiterer Teil zur Weiterleitung in die Brennstoffzelle verdichtet wird. Insbesondere ist dabei ein Vorwärmer für Brennstoffzellen mit einem katalytischen Brenner vorgesehen, der einerseits mit Anodenabgas und andererseits mit Umgebungsluft gespeist wird und dessen Verbrennungsabgase der Kathode zugeführt werden.

Die US 2002/142208 A1 offenbart eine Brennstoffzelle mit einer Vorrichtung zum energetisch effizienten Separieren von Gas bzw. Abgas, insbesondere zum Separieren von Wasserstoff oder Sauerstoff. Aus dieser Druckschrift ist bekannt, ein Brennstoffsystem mit einem katalytischen Brenner auszustatten, wobei zu dem Brenner Anodenabgas und Umgebungsluft geführt wird. Die heißen Abgase aus dem Brenner werden der Kathode zugeführt.

In der US 6 124 054 A ist ein Brennstoffzellensystem beschrieben, bei dem Anodenabgas katalytisch verbrannt wird. Dazu wird das wasserstoffhaltige Anodenabgas auf der Kathodenseite mit Eintrittsluft vermischt und dort katalytisch verbrannt. Dabei kann das Anodenabgas mit variierender Rate zugeführt werden.

Ohne eine systeminterne Verbrennung des Kraftstoff(Wasserstoff)-Spülgases ist die sicherheitstechnische Absicherung der Kraftstoff(Wasserstoff)-Spülung problematisch. Bisherige Lösungen basieren hierbei auf der Verdünnung des Kraftstoffs (Wasserstoffs), bei dem eine entsprechend große Luftmenge durch das Geräteinnere geleitet wird und so sichergestellt ist, dass kein explosionsfähiges Gasgemisch am Ausgang des Kraftstoff(Wasserstoff)-Spülgases auftritt.

Es besteht damit ein Bedarf an einem System, das ohne einen separaten Brenner oder eine Wärmeauskopplung bereits in der Anfangsphase eines Brennstoffzellenbetriebs eine Vorwärmung der Kathodenluft ermöglicht. Zudem besteht ebenfalls ein Bedarf an einem System, bei dem das Kraftstoff(Wasserstoff)-Spülgas keine potentielle Gefahren birgt.

Diese Aufgabe wird erfindungsgemäß durch die Bereitstellung eines Vorwärmers für Brennstoffzellen mit den Merkmalen gemäß dem unabhängigen Patentanspruch 1 und das Verfahren mit den Merkmalen gemäß dem unabhängigen Patentanspruch 12 gelöst. Weitere vorteilhafte Ausgestaltungen, Aspekte und Details der vorliegenden Erfindung ergeben sich aus den abhängigen Ansprüchen, der Beschreibung und den beigefügten Zeichnungen. Ausgestaltungen, Aspekte und Details, die im Zusammenhang mit dem erfindungsgemäßen Vorwärmer beschrieben sind, gelten dabei selbstverständlich auch im Zusammenhang mit dem erfindungsgemäßen Verfahren, und umgekehrt.

Der Erfindung liegt die Idee zugrunde, das Kraftstoff(Wasserstoff)-Spülgas zur Vorheizung zu verwenden.

Bei dem für den Betrieb der Brennstoffzelle(n) zu verwendenden Kraftstoff kann es sich insbesondere um Wasserstoff oder ein anderes, wasserstoffreiches Gas handeln.

Erfindungsgemäß weist ein Vorwärmer für Brennstoffzellen folgende Merkmale auf:
einen katalytischen Brenner, eine von einer Brennstoffzellenanode gespeiste erste Zufuhr für den Brenner, eine durch ein Sauerstoff-haltiges Gas gespeiste zweite Zufuhr für den Brenner und eine zu einer Brennstoffzellenkathode führende Abfuhr aus dem Brenner, wobei die erste Zufuhr als eine durch ein Kraftstoff-Spülgas der Brennstoffzellenanode gespeiste Zufuhr ausgebildet ist, wobei die erste Zufuhr für den Brenner eine Dosiervorrichtung aufweist, die dazu bestimmt ist, das pulsweise zugeführte Kraftstoff-Spülgas über einen längeren Zeitraum als einen Spülgaspuls dem Brenner zuzuführen, wobei die Dosiervorrichtung einen Speicherbereich und eine am der Kraftstoff-Spülgaszufuhr zum Speicherbereich entgegengesetzten Ende des Speicherbereichs angeordnete Drossel aufweist, wobei die Drossel aufgrund ihrer Durchtrittfläche den Durchgang des Kraftstoff-Spülgases gegenüber dem Zuführen des Kraftstoff-Spülgases zum Speicherbereich verkleinert und wobei die Abfuhr zum Abführen von durch die Reaktion des Kraftstoff-Spülgases und des Sauerstoff-haltigen Gases im Brenner erwärmtem Reaktionsgas ausgebildet ist.

Der Erfindung liegt mithin das Prinzip zugrunde, einen ohne äußeren Antrieb, Zündung oder dergleichen funktionierenden katalytischen Brenner direkt in den Strömungsweg des Kathodengases zu legen und ihn mit dem Kraftstoffspülgas und dem Kathodengas zu betreiben. Auf diese Weise kann katalytisch sofort eine Vorwärmung des sauerstoffhaltigen Gases erreicht werden und zugleich ein zum Spülen der Brennstoffzelle verwendeter Kraftstoff umgesetzt werden, so dass dessen Entsorgung nicht mehr notwendig ist. Durch die katalytische Reaktion entstehendes Wasser befeuchtet zudem das Kathodengas und Wasser aus dem Wasserstoffspülgas wird verdampft.

Es versteht sich, dass das zugrunde liegende Prinzip auch bei anderen Einsätzen als Brennstoffzellen verwendet werden kann, bei denen zwei miteinander reagierende Gase durch einen Reaktionsort geführt werden müssen und eine Vorwärmung zumindest eines Gases erforderlich ist. Durch die Verwendung eines katalytischen Brenners wird für den Verbrennungsprozess keine externe Energiequelle benötigt.

Bei einer bevorzugten Ausführungsform ist das sauerstoffhaltige Gas einfach die vorhandene Umgebungsluft. Dies wird bei den meisten Brennstoffzellenanwendungen der Normalfall sein. Es ist jedoch auch vorstellbar, andere sauerstoffhaltige Gase zu verwenden, beispielsweise reinen Sauerstoff aus Gasflaschen oder Gemische von Sauerstoff mit anderen geeigneten Gasen, zum Beispiel inerten Gasen, Edelgasen oder Stickstoff.

Vorzugsweise umfasst der katalytische Brenner einen Katalysatorbereich, in dem sich das Kraftstoffspülgas und zumindest ein Teil des sauerstoffhaltigen Gases mischen und in dem eine Reaktion von Kraftstoff und Sauerstoff stattfindet.

In einfacheren Ausführungsformen besteht der gesamte katalytische Brenner aus einem katalytischen Bereich, beispielsweise einem porösen, mit einem Katalysator beschichteten Körper oder aus einem Körper mit einer wabenförmigen Kanalstruktur, durch die das sauerstoffhaltige Gas durchgeleitet wird, und an dem das Kraftstoffspülgas beispielsweise seitlich zugeführt wird.

Komplexere Ausführungsformen des katalytischen Brenners haben neben dem Katalysatorbereich noch weitere funktionsverbessernde Elemente. Ein zusätzliches solches Element des katalytischen Brenners kann ein Wärmetauscher sein, der zur Übertragung von Wärmeenergie aus dem der Reaktion zugeführten Teil des Stroms sauerstoffhaltigen Gases auf den Rest des den katalytischen Brenner durchströmenden Gases dient. Durch einen solchen zusätzlichen Wärmetauscher muss nur ein Teil des sauerstoffhaltigen Gases in eine Reaktionsumgebung mit dem Kraftstoffspülgas gebracht werden, so dass bei geeigneter Auswahl der Strömungsverhältnisse, beispielsweise über Regulation des Kraftstoffdrucks oder des Gasdrucks des sauerstoffhaltigen Gases oder durch Klappen zur Umlenkung eines Teils des Stroms sauerstoffhaltigen Gases stets eine optimale Reaktionsmischung für die katalytische Reaktion zwischen Kraftstoff und Sauerstoff aufrecht erhalten werden kann. Bei bestimmten, als Normalfall anzusehenden Ausführungsformen der Erfindung liegt eine zylindrische Wabe vor, wobei das Gemisch aus sauerstoffhaltigem Gas und Wasserstoffgas komplett über den Katalysator geführt werden.

Der katalytische Brenner kann in einer weiteren bevorzugten Ausführungsform auch einen Mischbereich aufweisen, der zur Mischung des der Reaktion zugeführten Teils des Stroms sauerstoffhaltigen Gases mit dem Rest den katalytischen Brenner durchströmenden Gases dient. Auch bei dieser, die obige Ausführungsform gegebenenfalls auch ergänzenden, Ausführungsform der vorliegenden Erfindung wird nur ein Teil des sauerstoffhaltigen Gases in den Reaktionsbereich mit dem Kraftstoffspülgas gebracht. Hierbei erfolgt jedoch die Wärmeübertragung durch ein unmittelbares Mischen und nicht durch einen Wärmetauscher. Eine solche Mischung kann beispielsweise in Stromrichtung hinter dem Katalysatorbereich des katalytischen Brenners erfolgen. Eine einfache Zusammenführung kann einfach darin bestehen, dass die beiden Gasströme (sauerstoffhaltiges, unreagiertes Gas und Reaktionsgas) in einer am Ende des katalytischen Brenners angeordneten Mischkammer gemischt werden. Komplexere Ausführungsformen können zusätzliche Verwirbelungsbleche und dergleichen zur Verfügung stellen, um eine rasche Mischung der beiden Ströme zu bewirken.

Bei einer besonders bevorzugten Ausführungsform ist der katalytische Brenner zylinderförmig aufgebaut, mit einem äußeren Zylindermantelhohlraum (Ringspalt) zur Zufuhr des Kraftstoffspülgases, einen inneren Zylinderhohlraum zur Zufuhr des sauerstoffhaltigen Gases und einen zwischen dem äußeren Zylindermantelhohlraum und dem inneren Zylinderhohlraum angeordneten Zylindermantelkatalysator. Bei diesem dreischichtigen Aufbau strömt außen das Kraftstoffspülgas, durch den zentralen Bereich das sauerstoffhaltige Gas und im zwischen den beiden angeordneten Katalysatorbereich kommt es zu einer Vermischung der beiden Gase und der sich daraus ergebenden katalytischen Reaktion. Unter einem Zylindermantel ist hierbei ein durch zwei zylindrische Flächen unterschiedlichen Durchmessers umgrenzter Raum zu verstehen.

Bevorzugterweise ist der Zylindermantelkatalysator so aufgebaut, dass ein Teil des Stroms sauerstoffhaltigen Gases ihn durchströmen kann oder durchströmt. Im Gegensatz zu einer einfacheren Diffusionslösung ist bei dieser bevorzugten Ausführungsform der katalytische Brenner so aufgebaut, dass das sauerstoffhaltige Gas direkt in den Katalysatorbereich eindringen und ihn durchströmen kann. Dies kann beispielsweise dadurch erreicht werden, dass eine entsprechende Porosität des Katalysatorbereichs vorgesehen ist, vorzugsweise in Richtung des Gesamtstroms von sauerstoffhaltigem Gas und ein Teil des sauerstoffhaltigen Gases auf die Stirnfläche des entsprechenden Zylindermantels aufgeleitet wird, um so in den Zylindermantel des Katalysatorbereichs eindringen zu können.

Bei bestimmten Ausführungsformen der vorliegenden Erfindung kann es wünschenswert sein, dass der katalytische Brenner des weiteren einen nicht katalytisch betriebenen Vorwärmbereich zur Erwärmung des sauerstoffhaltigen Gases aufweist. Dies ist besonders nützlich in Fällen, bei denen während des Startvorgangs der Brennstoffzelle das Gemisch der Gase, welche dem Katalysator zugeführt werden, für eine katalytische Reaktion im Katalysatorbereich zu kalt ist. Dies kann beispielsweise bei Einsatz im Freigelände, in kalten Nächten oder allgemein bei automobilen Brennstoffzellen mit stark schwankenden Betriebsbedingungen der Fall sein.

Der Vorwärmbereich kann beispielsweise ein elektrisch erhitzter Teil stromaufwärts des Katalysatorbereichs sein.

Beispielsweise kann einfach eine erste Zone des Katalysatorbereichs als Vorwärmstufe ausgeführt sein, die mit Hilfe einer von außen angelegten elektrischen Spannung beheizt werden kann. In diesem Fall sollte dieser Bereich oder der gesamte Katalysatorbereich elektrisch isoliert ausgeführt sein, um einen Widerstandsstromfluss durch den elektrisch zu erhitzenden Teil zu gestatten.

Der Katalysatorbereich ist in besonders bevorzugten Ausführungsformen von einer Wabenstruktur. Dieses gestattet einen stabilen Aufbau bei gleichzeitig großer katalytischer Oberfläche und insbesondere ein günstiges Strömungsverhalten für entweder ein oder beide (je nach Zuführung) reagierenden Gase.

Des Weiteren können die Zufuhren für das Kraftstoffspülgas und das sauerstoffhaltige Gas im katalytischen Brenner im Gegenstrom ausgebildet sein. Die beiden Ströme fließen also gegeneinander und ermöglichen dadurch einen besondere effektiven Wärmeaustausch.

Der katalytische Brenner gemäß der vorliegenden Erfindung führt zu einer Beschleunigung von Brennstoffzellenkaltstarts, insbesondere unter ungünstigen Umgebungsbedingungen. Im Rahmen des Startvorgangs kann die Wärmeleistung des katalytischen Brenners durch gezieltes Regulieren des Spülwasserstoffs je nach Anforderung (z.B. bei besonders niedriger Außentemperatur) fast beliebig eingestellt werden. Er bewirkt eine Steigerung des Brennstoffzellensystemwirkungsgrads und damit eine Kraftstoffeinsparung. Die Lebensdauer des gesamten Brennstoffzellenstacks kann durch die Maßnahmen verlängert werden. Sicherheitsrisiken, wie Wasserstoffexplosionen und dergleichen können vermindert werden, was zu einer Verminderung des sicherheitstechnischen Geräteaufwands führt. Dadurch können die Systemkosten deutlich vermindert werden. Zudem hat der katalytische Brenner gemäß der Erfindung den ökologischen Vorteil, dass kein Kraftstoff an die Umgebung abgegeben wird, da dieser mit dem sauerstoffhaltigen Gas reagiert.

Mit Hilfe des Einsatzes eines katalytischen Brenners der vorgenannten Art zu katalytischen Umsetzung von Wasserstoff mit Sauerstoff aus der Luft zu Wasser etwa wird kein Wasserstoff mehr an die Umgebung abgegeben. Einerseits werden hierdurch die Emissionen auf Null abgesenkt, andererseits sind keine sicherheitstechnischen Vorkehrungen mehr notwendig, da die Systemabluft nur noch Sauerstoff abgereicherte feuchte Luft enthält.

Ein grundsätzliches Merkmal des Spülvorgangs (Purge) ist sein diskontinuierlicher Betrieb. Hierbei wird in der Regel nur für kurze Zeit, aus einem langen Zeitintervall, das Spülgas aus dem Spülvorgang an die Luft abgegeben. Dies hat unter Umständen einen negativen Einfluss auf den Katalysatorbetrieb und auf die gewünschten Funktionen einer Kathodenluftbefeuchtung sowie einer Kathodenluftvorwärmung. So wird nur währen der vergleichsweise kurzen Spülzeit Wasserstoff verbrannt, während in der übrigen Zeit die Luft nicht vorgewärmt und befeuchtet werden kann.

Erfindungsgemäß weist die erste Zufuhr für den Brenner eine Dosiervorrichtung auf, die dazu bestimmt ist, das pulsweise zugeführte Kraftstoff-Spülgas über einen längeren Zeitraum als einen Spülgaspuls dem Brenner zuzuführen.

Durch die Dosiervorrichtung kann die Dosierung von Spülgas vergleichmäßigt und trotz des diskontinuierlichen Betriebs des Spülvorgangs eine kontinuierliche Dosierung sichergestellt werden.

Die Dosiervorrichtung weist einen Speicherbereich und eine am der Kraftstoff-Spülgaszufuhr zum Speicherbereich entgegengesetzten Ende des Speicherbereichs angeordnete Drossel auf, wobei die Drossel aufgrund ihrer Durchtrittfläche den Durchgang des Kraftstoff-Spülgases gegenüber dem Zuführen des Kraftstoff-Spülgases zum Speicherbereich verkleinert.

Es wird also einfach zwischen dem Spülventil in der Zufuhr und der Einleitungsstelle in den katalytischen Brenner oder dessen Luftkanal eine Dosiervorrichtung integriert, die im einfachsten Fall aus einem kleinen Behälter mit einem gewissen Speichervolumen besteht. Dieser Speicherbereich kann je nach Ausführungsform ebenfalls aus einem im Querschnitt vergrößerten Zuführrohr bestehen. Am Ausgang aus diesem Behälter ist eine Drossel angeordnet, die beispielsweise als Blende ausgeführt sein kann. Während des Spülvorgangs strömt Spülgas in den Speicherbereich. Da je nach gewählter Auslassöffnung jedoch nur eine geringe Menge Spülgas den Speicherbereich wieder verlässt, baut sich ein dem Systemdruck entsprechendes Druckniveau auf. Nach dem Ende des Spülvorgangs oder währenddessen wird das Spülgas aus dem Speicherbereich in genau definierter Menge in die Luft eingeleitet. In der Folge strömt solange Spülgas aus dem Behälter, bis sich die Druckniveaus von Speicherbereich und Kathodenluftstrecke angeglichen haben. Als Folge davon wird der Wasserstoff aus dem Speicherbereich gleichmäßiger abgegeben. Die Dauer der Spülgasabgabe aus dem Speicherbereich ist unter Berücksichtigung des Speichervolumens über die Drossel beliebig einstellbar.

Das Spülintervall und die Dauer kann vorteilhaft weitgehend frei gesteuert werden. Das heißt, während der Startphase kann eine unterschiedliche Strategie im Vergleich zum stationären Betrieb gewählt werden. So ist es denkbar, beim Start eine vermehrte Menge von Kraftstoff, beispielsweise Wasserstoff, dem katalytischen Brenner zuzuführen und so eine erhöhte Wärmeleistung zugunsten einer schnelleren oder verstärkten Luftvorwärmung zu erzielen. Das Intervall und die Dauer können weiterhin in Abhängigkeit der äußeren Betriebsbedingungen (zum Beispiel Lufttemperatur) eingestellt beziehungsweise vorgegeben werden. Gleiches gilt entsprechend für den stationären Betrieb.

Des Weiteren ist die Erfindung auf ein Verfahren gerichtet, wobei alles bezüglich der Vorrichtung gesagte auch für das Verfahren gilt, so dass wechselweise Bezug genommen werden soll.

Die Erfindung ist also auf ein Verfahren zum Vorwärmen von Brennstoffzellen gerichtet, das mit einer wie vorstehend beschriebenen erfindungsgemäßen Vorrichtung betrieben wird und das die folgenden Schritte aufweist:
- Speisen einer ersten Zufuhr eines katalytischen Brenners durch ein Kraftstoff-Spülgas einer Brennstoffzellenanode für den Brenner,
- Speisen einer zweiten Zufuhr für den Brenner durch ein Sauerstoff-haltiges Gas, und
- Weiterleiten des durch die Reaktion des Kraftstoff-Spülgases und des Sauerstoffhaltigen Gases im Brenner erwärmten Reaktionsgas zu einer Brennstoffzellenkathode.

Das Verfahren kann zumindest zwei Phasen aufweisen, wobei in einer ersten Startphase der Brennstoffzelle eine größere Menge des Kraftstoff-Spülgases eingespeist wird, um so eine höhere Wärmeleistung zugunsten einer schnelleren oder verstärkten Speisung Sauerstoff-haltigen Gases als bei einer zweiten Phase zu erzielen, bei der eine geringere Einspeisung des Kraftstoff-Spülgases erfolgt. Das Intervall und die Dauer können weiterhin in Abhängigkeit von den äußeren Betriebsbedingungen, beispielsweise der Lufttemperatur eingestellt beziehungsweise vorgegeben werden. Gleiches gilt entsprechend für einen stationären Betrieb.

Im Folgenden soll die Erfindung anhand beispielhafter Ausführungsformen weiter erläutert werden, wobei auf die beigefügten Zeichnungen Bezug genommen wird, in denen folgendes dargestellt ist:
- Figur 1: zeigt das Gesamtsystem aus Brennstoffzellen und katalytischem Brenner;
- Figur 2: zeigt eine beispielhafte Ausführungsform eines erfindungsgemäßen katalytischen Brenners im Querschnitt;
- Figur 3: zeigt den gegenüber Figur 2 um 90° gedrehten katalytischen Brenner längs der Line A-A von Figur 2; und
- Figur 4: zeigt eine einfachere Ausführungsform eines katalytischen Brenners im Querschnitt.

Erfindungsgemäß wird die Kathodenluftvorwärmung mit Hilfe eines katalytischen Brenners, auch als Katbrenner bezeichnet, umgesetzt. Als Kraftstoff dient hierbei der Wasserstoff, der aus den Brennstoffzellen Spül- (Purge-) Vorgang bisher an die Umgebung abgegeben wurde. Der Wasserstoff wird unter Freisetzung von thermischer Energie innerhalb des Katalysators in Verbindung mit Luft-Sauerstoff zu Wasser umgesetzt. Der Reaktor steht in thermischem Kontakt mit der Kathodenluft, welche auf diese Weise erwärmt wird. Das entstehende Produktwasser, sowie das aus der Annode während des Spülvorgangs ausgetragene Wasser werden nach dem Reaktor der Kathodenluft zugeführt, wobei das aus der Anode ausgetragene Wasser durch die Reaktionswärme verdampft wird. Dieser Mechanismus gewährleistet eine zusätzliche Befeuchtung des der Kathode zugeführten Gases, beispielsweise Luft.

Der katalytische Brenner kann konstruktiv so ausgeführt sein, dass er gleichzeitig die Funktion des Wärmetauschers übernimmt. Bei Bedarf kann der katalytische Brenner in zwei Zonen unterteilt sein, wobei die erste Zone eine elektrische Vorwärmzone des Gasgemisches bildet.

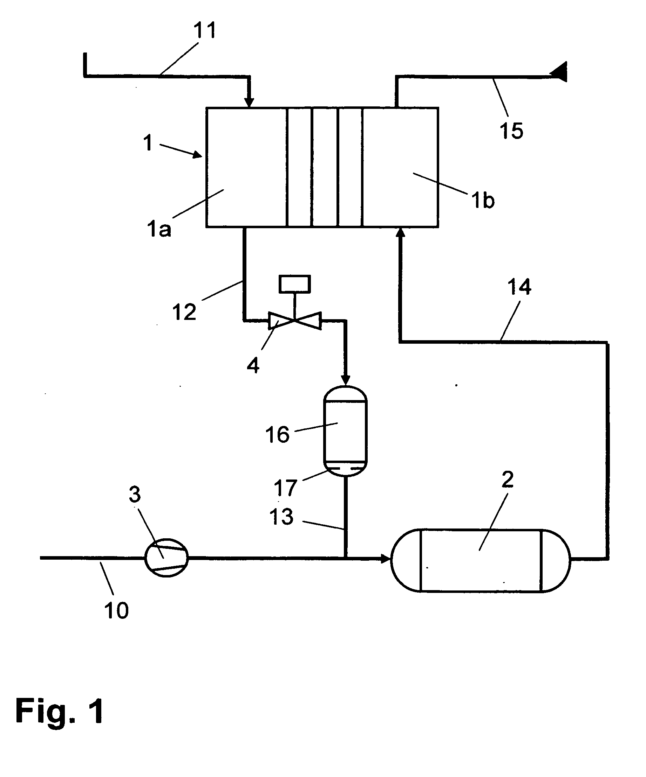

Figur 1 zeigt eine beispielhafte Ausführungsform der vorliegenden Erfindung. Das System besteht aus einer Brennstoffzellenanordnung 1 mit einem Anodenbereich 1 a und einem Kathodenbereich 1 b, einem katalytischen Brenner 2, einem Gebläse oder einer vergleichbaren Gaspumpe 3, einem so genannten Purgeventil 4 sowie diese Elemente verbindenden Rohrleitungen. Die benötigte Systemluft (Kathodenluft) wird über eine Zufuhrleitung 10 mit Hilfe eines üblichen Gebläses oder einer vergleichbaren Pumpe 3, komplett oder als Teilstrom dem katalytischen Brenner 2 zugeführt. Das zweite für die Reaktion notwendige Gas, wird in Form von Wasserstoff über eine Leitung 11, zunächst als Spülgas durch die Brennstoffzellenanordnung 1 hindurchgeführt, und dann über Leitung 12, Purgeventil 4 und Leitung 13 ebenfalls dem katalytischen Brenner 2 zugeführt und/oder der Systemluft beigemischt.

Bei der vorliegenden Ausgestaltung werden die beiden Gase vor Erreichen des katalytischen Brenners 2 gemischt, es ist jedoch gleichermaßen möglich, dass diese erst im katalytischen Brenner 2 gemischt werden. Der Wasserstoff reagiert im katalytischen Brenner 2 mit dem Sauerstoff der über die Leitung 10 zugeführten Systemluft unter Wärmeentwicklung katalytisch zu Wasser, wie bekannt.

Die bei der Reaktion zwischen Wasserstoff und Sauerstoff entstandenen Wärme wird bei kompletter Luftzuführung direkt an die Luft übertragen. Für den Fall einer erfindungsgemäß ebenfalls möglichen Luftstromaufteilung, bei der nur die überstöchiometrisch benötigte Luftmenge dem Katalysator zugeführt wird, kann die Luft aus dem Katalysatorbereich über entsprechende Wärmetauscherflächen an die Luft übertragen werden oder nach Zumischung am Austritt aus dem Reaktor.

Die benötigte Teilluftmenge, die zusammen mit dem Wasserstoff dem Reaktor zuzuführen ist, ergibt sich aus der notwendigen Luftzahl, dem so genannten Stöchiometriefaktor, welcher auch vom eingesetzten Katalysator abhängig ist. Es gilt in der Regel, dass λ = 2-5 ist. In beiden Fällen findet im Brenner beziehungsweise am Ausgang des Brenners eine Wärmeübertragung und auch eine Stoffübertragung, nämlich Produktwasser aus der Reaktion zwischen Wasserstoff und Sauerstoff sowie auch Wasser aus dem Spülvorgang in der Brennstoffzellenanordnung 1, an die Systemluft, das heißt das sauerstoffhaltige Gas, statt. Nach Verlassen des Reaktors 2 wird die erwärmte Luft über Leitung 14 der Kathode 1 b der Brennstoffzellenanordnung 1 zugeführt und über Leitung 15 schließlich abgeführt.

Durch ein gezieltes Steuern des Spülintervalls und der Spüldauer jeweils durch Ein- und Ausschaltung des Purgeventils 4, lässt sich praktisch jeder beliebige Grad an Vorwärmung beziehungsweise Befeuchtung einstellen.

Zusätzlich ist in dieser konkret gezeigten Ausführungsform ein Speicherbereich 16 in Form eines Druckbehälters in der Leitung 13 vorgesehen, der das Spülgas aus der Leitung und dem Purgeventil 4 aufnimmt und in durch eine Drossel 17 kontrollierten Weise wieder abgibt, um dadurch die Zufuhr an Spülgas zu vergleichmäßigen.

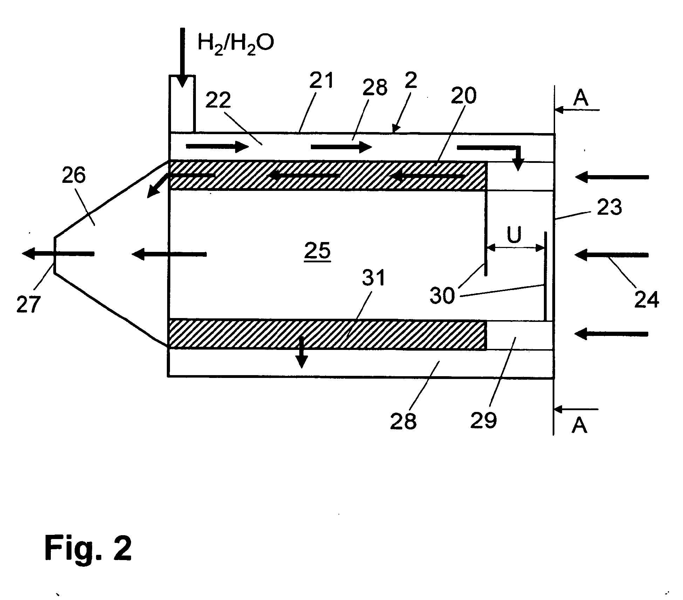

Figur 2 zeigt in einer bevorzugten Ausführungsform eine konstruktive Ausführung eines katalytischen Brenners 2. Der eigentliche Katalysatorbereich ist als Ringzylinder bzw. Zylindermantel 20 ausgeführt, indem auf einer Kanalstruktur, beispielsweise einer Wabenstruktur, einer porösen Struktur, einem Flies oder dergleichen, das Katalysatormaterial aufgebracht ist. Der katalytische Brenner weist weiterhin eine Außenhaut 21, einen Zufuhrbereich 22 für das Wasserstoffspülgas und einen Zufuhrbereich 23 für das sauerstoffhaltige Gas auf. Die Strömung des sauerstoffhaltigen Gases ist durch Pfeile 24 verdeutlicht, wobei aufgrund des Aufbaus bei einer Lufteinströmung über den gesamten Zylinderquerschnitt nur die für die Reaktion benötigte Luftmenge über den Katalysatorbereich 20 strömt. Die Restmenge strömt durch den Innenraum 25 des katalytischen Brenners und wird am Ende wieder mit dem aus dem Katalysatorbereich strömenden Reaktionsgas in einer Mischkammer 26 gemischt, bevor der Gesamtstrom durch die Abfuhr 27 der Brennstoffzellenanordnung 1 zugeführt wird. Bei dem vorliegenden Beispiel wird das Wasserstoffspülgas, das beispielsweise ein Gemisch aus Wasserstoff und Wasser darstellt, aus dem Spülvorgang einem den Katalysatorbereich umschließenden Zylindermantelhohlraum beziehungsweise Ringspalt 28 über einen Zufuhrbereich 22 im Gegenstrom zugeführt, wie durch die Pfeile im Bereich 28 im Gegensatz zu den Pfeilen im Katalysatorbereich 20 verdeutlicht ist. Ein Teil der Reaktionswärme wird nach außen an den Zylindermantelhohlraum 28 übertragen, so dass das zunächst flüssige Wasser im Spülgas vorgewärmt beziehungsweise verdampft wird. Dadurch wird verhindert, dass Wasser auf der Katalysatoroberfläche des Katalysatorbereichs 20 schlagartig verdampft, was eine mechanische Zerstörung des Katalysatorbereichs 20 zur Folge haben kann.

Die in Figur 2 dargestellte Ausführungsform verfügt darüber hinaus über zwei Wärmzonen. Die erste Zone 29 im Katalysatorbereich 20 ist dabei mit einer schematisch dargestellten Spannungsquelle 30 verbunden, zwischen deren Anschlusspolen ein Spannungspotential U liegt. Es versteht sich, dass zu diesem Zwecke die Zone 29 gegenüber der Außenhülle 21 und weiteren Komponenten des katalytischen Brenners 2 elektrisch isoliert sein muss. Im Falle einer Gasvorwärmung fließt durch diese erste Zone ein Strom, der die Zone 29 aufgrund des hohen elektrischen Widerstands erhitzt. Damit erfolgt eine Vorwärmung des in den Katalysatorbereich eindringenden Stroms 24 stauerstoffhaltigen Gases, bevor es in die nicht erwärmte zweite Zone 31 des Katalysatorbereichs eindringt.

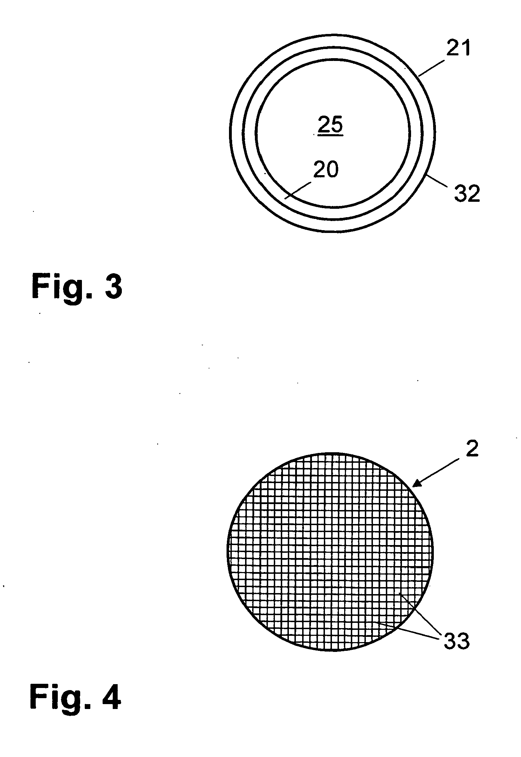

Figur 3 zeigt den katalytischen Brenner 2 im Querschnitt, wobei die, die erste Zufuhr für das Wasserstoffgas beschränkende Abdeckung 32 zu erkennen ist, die ein Vermischen von Wasserstoff und Luft im Bereich 28 verhindert.

Figur 4 zeigt eine weitere Ausführungsform des katalytischen Brenners 2 im Querschnitt, wobei eine einfachere, vorzugsweise vollzylindrische Wabenstruktur mit Zwischenwänden 33 die katalytische Oberfläche vergrößert. Je nach Ausführungsform werden hier die Gase in einer Vorkammer gemischt und die bereits gemischten Gase durch die Katalysatorwabenstruktur der Figur 4 geleitet. Dabei kann die gesamte Menge des Gases über den Katalysator geleitet werden.

## Patentansprüche

1. Vorwärmer für Brennstoffzellen (1), aufweisend einen katalytischen Brenner (2), eine von einer Brennstoffzellenanode (1a) gespeiste erste Zufuhr (22) für den Brenner (2), eine durch ein Sauerstoffhaltiges Gas gespeiste zweite Zufuhr (23) für den Brenner (2) und eine zu einer Brennstoffzellenkathode (1b) führende Abfuhr (27) aus dem Brenner (2), **dadurch gekennzeichnet, dass** die erste Zufuhr (22) als eine durch ein Kraftstoff-Spülgas der Brennstoffzellenanode (1 a) gespeiste Zufuhr ausgebildet ist, dass die erste Zufuhr für den Brenner eine Dosiervorrichtung aufweist, die dazu bestimmt ist, das pulsweise zugeführte Kraftstoff-Spülgas über einen längeren Zeitraum als einen Spülgaspuls dem Brenner (2) zuzuführen, dass die Dosiervorrichtung einen Speicherbereich (16) und eine am der Kraftstoff-Spülgaszufuhr (12) zum Speicherbereich (16) entgegengesetzten Ende des Speicherbereichs angeordnete Drossel (17) aufweist, wobei die Drossel aufgrund ihrer Durchtrittfläche den Durchgang des Kraftstoff-Spülgases gegenüber dem Zuführen des Kraftstoff-Spülgases zum Speicherbereich (16) verkleinert und dass die Abfuhr (27) zum Abführen von durch die Reaktion des Kraftstoff-Spülgases und des Sauerstoff-haltigen Gases im Brenner (2) erwärmtem Reaktionsgas ausgebildet ist.

2. Vorwärmer gemäß Anspruch 1, **dadurch gekennzeichnet, dass** das Sauerstoff-haltige Gas Umgebungsluft ist.

3. Vorwärmer gemäß Anspruch 1 oder 2, **dadurch gekennzeichnet, dass** der katalytische Brenner (2) einen Katalysatorbereich (20) umfasst, in dem sich das Kraftstoff-Spülgas und zumindest ein Teil des Sauerstoff-haltigen Gases mischen und in dem eine Reaktion von Kraftstoff und Sauerstoff stattfindet.

4. Vorwärmer gemäß einem der Ansprüche 1 bis 3, **dadurch gekennzeichnet, dass** der katalytische Brenner (2) einen Wärmetauscher aufweist, zur Übertragung von Wärmeenergie aus dem der Reaktion zugeführten Teil des Stroms Sauerstoff-haltigen Gases auf den Rest (24) des den katalytischen Brenner (2) durchströmenden Gases.

5. Vorwärmer gemäß einem der Ansprüche 1 bis 4, **dadurch gekennzeichnet, dass** der katalytische Brenner (2) einen Mischbereich (26) aufweist, zur Mischung des der Reaktion zugeführten Teils des Stroms Sauerstoff-haltigen Gases mit dem Rest des den katalytischen Brenner (2) durchströmenden Gases.

6. Vorwärmer gemäß einem der Ansprüche 1 bis 5, **dadurch gekennzeichnet, dass** der katalytische Brenner (5) zylinderförmig aufgebaut ist, mit einem äußeren Zylindermantelhohlraum (28) zu Zufuhr des Kraftstoff-Spülgases, einem inneren Zylinderhohlraum (25) zur Zufuhr des Sauerstoff-haltigen Gases und einem zwischen dem äußeren Zylindermantelhohlraum (28) und dem inneren Zylinderhohlraum (25) angeordneter Zylindermantelkatalysator (20).

7. Vorwärmer gemäß einem der Ansprüche 1 bis 6, **dadurch gekennzeichnet, dass** der Zylindermantelkatalysator (20) so aufgebaut ist, dass ein Teil des Stroms Sauerstoff-haltigen Gases ihn durchströmen kann oder durchströmt.

8. Vorwärmer gemäß einem der Ansprüche 1 bis 7, **dadurch gekennzeichnet, dass** der katalytische Brenner des weiteren einen nicht katalytisch betriebenen Vorwärmbereich (29) zur Erwärmung des Sauerstoff-haltigen Gases aufweist.

9. Vorwärmer gemäß Anspruch 8, **dadurch gekennzeichnet, dass** der Vorwärmbereich (29) ein elektrisch erhitzter Teil stromaufwärts des Katalysatorbereichs (20) ist.

10. Vorwärmer gemäß einem der Ansprüche 3 bis 9, **dadurch gekennzeichnet, dass** der Katalysatorbereich (20) eine Wabenstruktur aufweist.

11. Vorwärmer gemäß einem der Ansprüche 1 bis 10, **dadurch gekennzeichnet, dass** die Zufuhren (22, 23) für das Kraftstoff-Spülgas und das Sauerstoffhaltigem Gas im katalytischen Brenner (2) im Gegenstrom ausgebildet sind.

12. Verfahren zum Vorwärmen von Brennstoffzellen (1), das mit einer Vorrichtung gemäß einem der Ansprüche 1 bis 11 durchgeführt wird, aufweisend die folgenden Schritte:
- Speisen einer ersten Zufuhr (22) eines katalytischen Brenners (2) durch ein Kraftstoff-Spülgas einer Brennstoffzellenanode (1a) für den Brenner (2),
- Speisen einer zweiten Zufuhr (23) für den Brenner(2) durch ein Sauerstoffhaltiges Gas, und
- Weiterleiten des durch die Reaktion des Kraftstoff-Spülgases und des Sauerstoff-haltigen Gases im Brenner (2) erwärmten Reaktionsgas zu einer Brennstoffzellenkathode (1 b).

13. Verfahren gemäß Anspruch 12, **dadurch gekennzeichnet, dass** das Verfahren zumindest zwei Phasen aufweist, wobei in einer ersten Startphase der Brennstoffzelle eine größere Menge des Kraftstoff-Spülgases eingespeist wird, um so eine höhere Wärmeleistung zugunsten einer schnelleren oder verstärkten Speisung Sauerstoff-haltigen Gases als bei einer zweiten Phase zu erzielen, bei der eine geringere Einspeisung des Kraftstoff-Spülgases erfolgt.

## Claims

1. Preheater for fuel cells (1), comprising a catalytic burner (2), a first intake (22) for the burner (2) which is fed from a fuel cell anode (1a), a second intake (23) for the burner (2) which is fed by an oxygen-containing gas, and an outlet (27) from the burner (2) leading to a fuel cell cathode (1b), **characterised in that** the first intake (22) is embodied as an intake fed by a flushing fuel gas from the fuel cell anode (1a), **in that** the first intake for the burner has a metering device which is intended to feed the pulsed supply of flushing fuel gas to the burner (2) over a length of time that is longer than a pulse of flushing gas, **in that** the metering device has a storage region (16) and a throttle (17) arranged at the opposite end of the storage region (16) from the flushing fuel gas intake (12), wherein by virtue of its surface area the throttle reduces the throughflow of the flushing fuel gas relative to the supply of flushing fuel gas to the storage region (16) and **in that** the outlet (27) is designed to discharge reaction gas heated by the reaction of the flushing fuel gas and the oxygen-containing gas in the burner (2).

2. Preheater according to claim 1, **characterised in that** the oxygen-containing gas is ambient air.

3. Preheater according to claim 1 or 2, **characterised in that** the catalytic burner (2) comprises a catalyst region (20) in which the flushing fuel gas and at least some of the oxygen-containing gas are mixed and in which a reaction takes place between the fuel and oxygen.

4. Preheater according to one of claims 1 to 3, **characterised in that** the catalytic burner (2) comprises a heat exchanger for transferring heat energy from the part of the current of oxygen-containing gas fed into the reaction to the remainder (24) of the gas flowing through the catalytic burner (2).

5. Preheater according to one of claims 1 to 4, **characterised in that** the catalytic burner (2) comprises a mixing region (26) for mixing the part of the current of oxygen-containing gas fed into the reaction with the remainder of the gas flowing through the catalytic burner (2).

6. Preheater according to one of claims 1 to 5, **characterised in that** the catalytic burner (5) is of cylindrical construction, having an outer cylinder casing cavity (28) for supplying the flushing fuel gas, an inner cylinder cavity (25) for supplying the oxygen-containing gas and a cylinder casing catalyst (20) arranged between the outer cylinder casing cavity (28) and the inner cylinder cavity (25).

7. Preheater according to one of claims 1 to 6, **characterised in that** the cylinder casing catalyst (20) is designed so that some of the current of oxygen-containing gas is able to flow through it or does flow through it.

8. Preheater according to one of claims 1 to 7, **characterised in that** the catalytic burner furthermore comprises a non-catalytically operated preheating region (29) for heating the oxygen-containing gas.

9. Preheater according to claim 8, **characterised in that** the preheating region (29) is an electrically heated part upstream of the catalyst region (20).

10. Preheater according to one of claims 3 to 9, **characterised in that** the catalyst region (20) has a honeycomb structure.

11. Preheater according to one of claims 1 to 10, **characterised in that** the intakes (22, 23) for the flushing fuel gas and the oxygen-containing gas in the catalytic burner (2) are constructed in counter flow.

12. Method of preheating fuel cells (1) which is carried out with an apparatus according to one of claims 1 to 11, comprising the following steps:
- supplying a first intake (22) of a catalytic burner (2) with a flushing fuel gas for a fuel cell anode (1a) for the burner (2),
- supplying a second intake (23) for the burner (2) with an oxygen-containing gas, and
- conveying the reaction gas heated by the reaction of the flushing fuel gas and the oxygen-containing gas in the burner (2) to a fuel cell cathode (1b).

13. Method according to claim 12, **characterised in that** the method comprises at least two phases, wherein in a first start-up phase of the fuel cell a larger quantity of the flushing fuel gas is fed in so as to achieve a greater heating performance, thus favouring a faster or more intensive feeding of oxygen-containing gas than in a second phase in which there is a lesser supply of the flushing fuel gas.

## Revendications

1. Préchauffeur pour piles à combustible (1), présentant un brûleur (2) catalytique, une première amenée (22) alimentée par une anode de pile à combustible (1a) pour le brûleur (2), une seconde amenée (23) alimentée par un gaz contenant de l'oxygène pour le brûleur (2) et une évacuation (27) menant à une cathode de pile à combustible (1b) du brûleur (2), **caractérisé en ce que** la première amenée (22) est réalisée comme une amenée alimentée par un gaz de balayage de combustible de l'anode de pile à combustible (1a), **en ce que** la première amenée pour le brûleur présente un dispositif de dosage qui est destiné à amener le gaz de balayage de carburant amené par impulsions pendant une période prolongée comme une impulsion de gaz de balayage au brûleur (2), **en ce que** le dispositif de dosage présente une zone d'accumulation (16) et un étranglement (17) disposé sur l'extrémité opposée à l'amenée de gaz de balayage de combustible (12) à la zone d'accumulation (16) de la zone d'accumulation, l'étranglement réduisant en raison de sa surface de passage, le passage du gaz de balayage de combustible par rapport à l'amenée du gaz de balayage de carburant à la zone d'accumulation (16) et **en ce que** l'évacuation (27) est réalisée pour l'évacuation du gaz de réaction réchauffé par la réaction du gaz de balayage de combustible et du gaz contenant de l'oxygène dans le brûleur (2).

2. Préchauffeur selon la revendication 1, **caractérisé en ce que** le gaz contenant de l'oxygène est de l'air ambiant.

3. Préchauffeur selon la revendication 1 ou 2, **caractérisé en ce que** le brûleur (2) catalytique comporte une zone de catalyseur (20), dans laquelle le gaz de balayage de combustible et au moins une partie du gaz contenant de l'oxygène se mélangent et dans laquelle une réaction de combustible et d'oxygène a lieu.

4. Préchauffeur selon l'une quelconque des revendications 1 à 3, **caractérisé en ce que** le brûleur (2) catalytique présente un échangeur de chaleur pour la transmission de l'énergie thermique de la partie amenée à la réaction du flux de gaz contenant de l'oxygène au reste (24) du gaz traversant le brûleur (2) catalytique.

5. Préchauffeur selon l'une quelconque des revendications 1 à 4, **caractérisé en ce que** le brûleur (2) catalytique présente une zone de mélange (26) pour le mélange de la partie amenée à la réaction du flux de gaz contenant de l'oxygène avec le reste du gaz traversant le brûleur (2) catalytique.

6. Préchauffeur selon l'une quelconque des revendications 1 à 5, **caractérisé en ce que** le brûleur (5) catalytique est constitué en forme de cylindre, avec un espace creux de corps de cylindre (28) extérieur pour l'amenée du gaz de balayage de combustible, un espace creux de cylindre (25) intérieur pour l'amenée du gaz contenant de l'oxygène et un catalyseur de corps de cylindre (20) disposé entre l'espace creux de corps de cylindre (28) extérieur et l'espace creux de cylindre (25) intérieur.

7. Préchauffeur selon l'une quelconque des revendications 1 à 6, **caractérisé en ce que** le catalyseur de corps de cylindre (20) est constitué de sorte qu'une partie du flux de gaz contenant de l'oxygène peut le traverser ou le traverse.

8. Préchauffeur selon l'une quelconque des revendications 1 à 7, **caractérisé en ce que** le brûleur catalytique présente en outre une zone de préchauffage (29) fonctionnant de manière non catalytique pour le chauffage du gaz contenant de l'oxygène.

9. Préchauffeur selon la revendication 8, **caractérisé en ce que** la zone de préchauffage (29) est une partie réchauffée électriquement en amont de la zone de catalyseur (20).

10. Préchauffeur selon l'une quelconque des revendications 3 à 9, **caractérisé en ce que** la zone de catalyseur (20) présente une structure en nid d'abeilles.

11. Préchauffeur selon l'une quelconque des revendications 1 à 10, **caractérisé en ce que** les amenées (22, 23) pour le gaz de balayage de combustible et le gaz contenant de l'oxygène dans le brûleur (2) catalytique sont réalisées à contrecourant.

12. Procédé de préchauffage de piles à combustible (1), qui est mis en oeuvre avec un dispositif selon l'une quelconque des revendications 1 à 11, présentant les étapes suivantes consistant à :
- alimenter une première amenée (22) d'un brûleur (2) catalytique en un gaz de balayage de combustible d'une anode de pile à combustible (1a) pour le brûleur (2),
- alimenter une seconde amenée (23) pour le brûleur (2) en un gaz contenant de l'oxygène et
- transmettre le gaz de réaction réchauffé par la réaction du gaz de balayage de combustible et du gaz contenant de l'oxygène dans le brûleur (2) à une cathode de pile à combustible (1b).

13. Procédé selon la revendication 12, **caractérisé en ce que** le procédé présente au moins deux phases, une quantité supérieure de gaz de balayage de combustible étant alimentée dans une première phase de départ de la pile à combustible afin d'obtenir une puissance calorifique supérieure au profit d'une alimentation plus rapide ou renforcée du gaz contenant de l'oxygène que lors d'une seconde phase, pour laquelle une alimentation plus faible du gaz de balayage de combustible est effectuée.
